**Europäisches Patentamt**

**European Patent Office**

**Office européen des brevets**

(19)

(11) Veröffentlichungsnummer: **0 139 885**
**A1**

(12) # EUROPÄISCHE PATENTANMELDUNG

(21) Anmeldenummer: **84108787.7**

(22) Anmeldetag: **25.07.84**

(51) Int. Cl.⁴: **A 47 J 37/06**

(30) Priorität: **07.09.83 DE 3332309**

(43) Veröffentlichungstag der Anmeldung:
**08.05.85 Patentblatt 85/19**

(84) Benannte Vertragsstaaten:
**AT BE CH DE FR IT LI NL**

(71) Anmelder: **GROSSAG Gesellschaft mit beschränkter Haftung**
**Brückäckerstrasse 9 Postfach 10 02 80**
**D-7170 Schwäbisch Hall(DE)**

(72) Erfinder: **Heidler, Herbert**
**Sommerberg 385**
**D-7174 Ilshofen-Eckartshausen(DE)**

(74) Vertreter: **Utermann, Gerd, Dipl.-Ing.**
**Kilianstrasse 7 Kilianspassage Postfach 3525**
**D-7100 Heilbronn(DE)**

(54) **Gerät zum Raclettieren, Grillen oder Überbacken.**

(57) Das Gerät zum Raclettieren, Grillen oder Überbacken ist doppelstöckig mit zwei übereinander angeordneten Tragplatten 40 und 41 für seitlich einschiebbare Pfännchen 100 ausgebildet. Über jeder Tragplatte 40 und 41 ist ein Rohrheizkörper 60 bzw. 61 angeordnet, für den ein eigener Schalter 24 bzw. 25 vorgesehen ist.

FIG. 1

EP 0 139 885 A1

# PATENTANWALT DIPL.-ING. GERD UTERMANN

71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

Europäische Patentanmeldung

G 23. 12 EP 39
19. Juli 1984/1S

Anmelder:     Firma
              GROSSAG Gesellschaft mit
              beschränkter Haftung
              Brückäckerstr. 9
              Postfach 10 02 80

              D-7170 Schwäbisch Hall

Bezeichnung:  Gerät zum Raclettieren, Grillen oder
              Überbacken

B e s c h r e i b u n g :

Die Erfindung betrifft ein Gerät zum Raclettieren, Grillen
oder Überbacken, bestehend aus einem Grundgehäuse mit einer
Tragplatte für seitlich einschiebbare Pfännchen, einem
elektrischen Rohrheizkörper, der sich im Abstand über der
Tragplatte erstreckt und sich am Grundgehäuse abstützt,
und einer oberhalb des Rohrheizkörpers angeordneten Abdeckplatte, die am Grundgehäuse abgestützt ist und ggf.
an ihrer Oberseite Auflagerippen für Grillgut aufweist.

Ein derartiges Gerät ist bekannt (DE-GM 77 03 541). Es
weist einen einzigen Rohrheizkörper auf, der sich im wesentlichen längs eines nicht vollständig geschlossenen
Kreisbogens um die vertikale Geräteachse erstreckt und
zwei an den Kreisbogen anschließende parallele Endabschnitte aufweist, die der Abstützung des Rohrheizkörpers

./.

dienen und zu elektrischen Anschlüssen im Grundgehäuse
führen.

Der Rohrheizkörper strahlt im Betrieb Wärme nach unten zur
Tragplatte ab, so daß mittels auf die Tragplatte gestellten
Raclettepfännchen raclettiert oder beispielsweise mittels
auf die Tragplatte gestellter Toastpfännchen überbacken
werden kann. Ist die Abdeckplatte an ihrer Unterseite
reflektierend ausgebildet, so wird im wesentlichen die gesamte vom Rohrheizkörper gelieferte Wärme für diese Vorgänge
benutzt. Ansonsten kann auch die Abdeckplatte durch den
Rohrheizkörper mit Unterwärme versorgt werden, so daß auf
der Abdeckplatte gegrillt werden kann.

Das bekannte Gerät von im wesentlichen kreisförmigem Grundriß kann beispielsweise mit sechs Raclettepfännchen in
Dreiecksform ausgestattet sein, um die Fläche der Tragplatte
möglichst vollständig zu nutzen. Dabei werden die Dreieckspfännchen mit ihrer Spitze zur Tragplattenmitte hin radial
eingeschoben, so daß der am äußeren Umfangsrand des Pfännchens angeschlossene wärmeisolierte Handgriff nach außen
vorsteht. Im Hinblick auf die vergleichsweise lange Erwärmungszeit reicht die Raclettierleistung des Geräts mit
sechs Pfännchen im allgemeinen nur für zwei oder höchstens
drei Personen - und zwar selbst dann, wenn Zusatzpfännchen
vorgesehen sind, so daß jeweils schon beim Entnehmen eines
Pfännchens ein anderes bereits gefülltes Pfännchen eingeschoben werden kann, um Ausfallzeiten zu vermeiden. Auch
beim Überbacken und Grillen ist ebenfalls häufig eine
größere Kapazität im Sinne einer gleichzeitigen schnellen
Versorgung mehrerer Personen erwünscht. Man hat deshalb
bereits versucht, die Zahl der Pfännchen zu erhöhen und
die Tragplattenfläche zu vergrößern, wobei die Tragplatte
rechteckig und die Pfännchen etwa quadratisch ausgeführt
sind. Dabei kann die Tragplatte beispielsweise zwei Reihen
zu je vier Pfännchen aufnehmen, die von gegenüberliegenden

./.

Seiten eingeschoben werden. Dieser Weg bedingt jedoch einen erhöhten Herstellungsaufwand und führt zu einem Gerät mit einer größeren Grundfläche, was dem Benutzer Nachteile bringt, weil er das Gerät weniger gut auf einem Tisch unterbringen sowie vor und nach dem Gebrauch aufbewahren kann.

Dementsprechend ist die Erfindung darauf gerichtet, das bekannte Gerät so zu verbessern, daß es eine höhere Leistung bzw. größere Anzahl von gleichzeitig erwärmten Pfännchen aufweist, ohne daß sich die Stellfläche des Geräts entsprechend erhöht.

Dazu ist erfindungsgemäß vorgesehen, daß über dem Rohrheizkörper eine am Grundgehäuse abgestützte weitere obere Tragplatte für seitlich einschiebbare Pfännchen und im Abstand über der oberen Tragplatte sowie unterhalb der Abdeckplatte ein oberer elektrischer Rohrheizkörper angeordnet sind.

Charakteristisch für die erfindungsgemäße Lösung ist somit eine doppelstöckige oder mehrstöckige Anordnung mit in verschiedenen Ebenen übereinander angeordneten Tragplatten und Rohrheizkörpern. Ersichtlich kann man auf diese Weise die Tragplattenfläche und die Anzahl der gleichzeitig einschiebbaren Pfännchen verdoppeln oder gar verdreifachen, ohne daß eine größere Stellfläche benötigt wird. Da die eingefügte zusätzliche Gerätezone nur eine vergleichsweise geringe Höhe erfordert, wird das Gerät keinesfalls unförmig und ist eher attraktiver nach Art einer Etagère und läßt auch eine ansprechendere Tischdekoration zu. Trotz der Verdoppelung oder Verdreifachung der Leistung bzw. Anzahl Pfännchen erhöht sich der Herstellungsaufwand nur in geringem Umfang, da im wesentlichen für eine zusätzliche Etage nur eine zusätzliche Tragplatte und ein zusätzlicher Rohrheizkörper erforderlich sind. Ferner kann ggf. eine

./.

Anpassung des Geräts an die zu versorgende Teilnehmerzahl dadurch erfolgen, daß die Rohrheizkörper getrennt ein- und ausgeschaltet werden können, um ggf. nur einen Teil der Gerätekapazität zu nutzen. Schließlich kann es auch von Vorteil sein, daß wenigstens eine Tragplatte gleichzeitig von oben und von unten beheizbar ist.

Zweckmäßige Ausgestaltungen und Weiterbildungen ergeben sich aus den Unteransprüchen. Dabei führt die Verwendung von durchgehenden Stützen zur gleichzeitigen Abstützung aller Tragplatten und der Abdeckplatte zu einem aus wenig Einzelteilen zusammengesetzten Gerät. Die Verbindung der Rohrheizkörper mit den zugehörigen Tragplatten sowie die Verwendung von Zwischenrohren, bei der die elektrische Verbindung mittels Zusammenstecken oder Aneinanderdrücken der Kontakte erfolgt, ermöglicht ein besonders einfaches stockweises Montieren oder auch Demontieren des Geräts. In diesem Zusammenhang ist auch das zentrale Distanzrohr zwischen benachbarten Tragplatten von Vorteil, das die nicht beheizten Endabschnitte der Rohrheizkörper sowie die Zwischenrohre und damit die Kontaktstellen zwischen diesen Teilen umschließt und abschirmt.

Zwei Ausführungsbeispiele der Erfindung werden nachfolgend anhand von schematischen Zeichnungen näher erläutert. Es zeigt:

Fig. 1 ein Gerät für 2 x 6 Raclettepfännchen zur Hälfte in Seitenansicht und zur Hälfte im Vertikalschnitt, wobei nur ein Pfännchen auf der oberen Tragplatte dargestellt ist;

Fig. 2 das Gerät nach Fig. 1 in einer etwas gedrehten perspektivischen Darstellung mit zum Teil auseinandergezogenen Einzelteilen;

./.

Fig. 3 zur Verbindung eines Rohrheizkörpers mit einer Tragplatte vorgesehene Teile in perspektivischer Darstellung und

Fig. 4 ein anderes Gerät für 2 x 4 etwa quadratische Toastpfännchen mit einer oberen Grillplatte in einer Fig. 2
entsprechenden, jedoch nicht auseinandergezogenen
perspektivischen Darstellung.

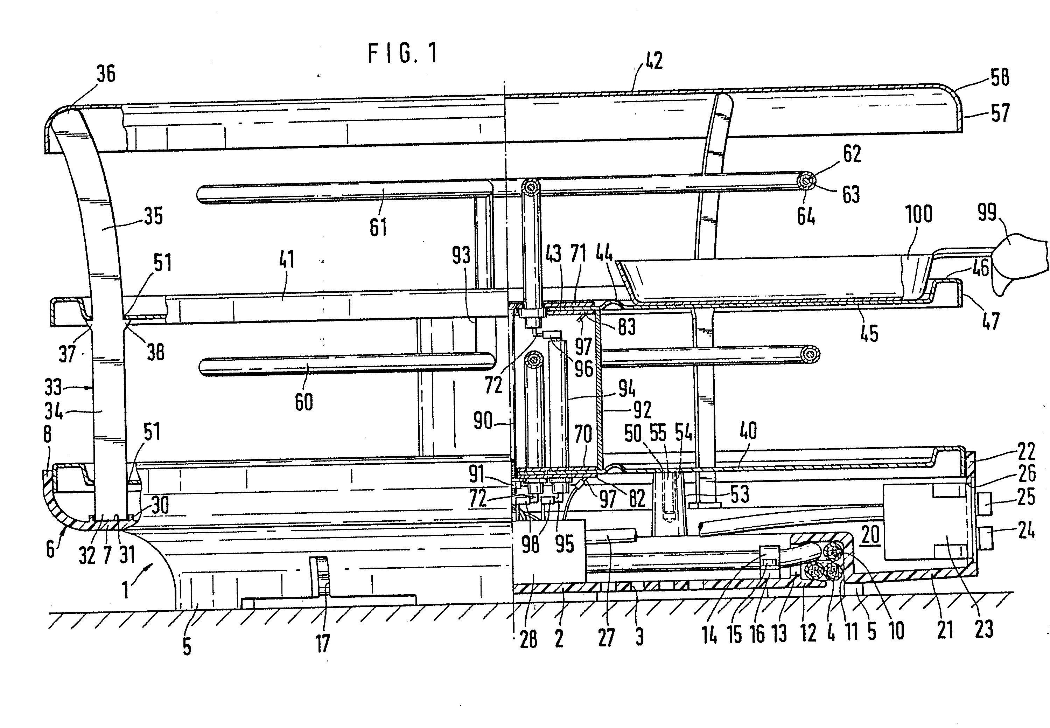

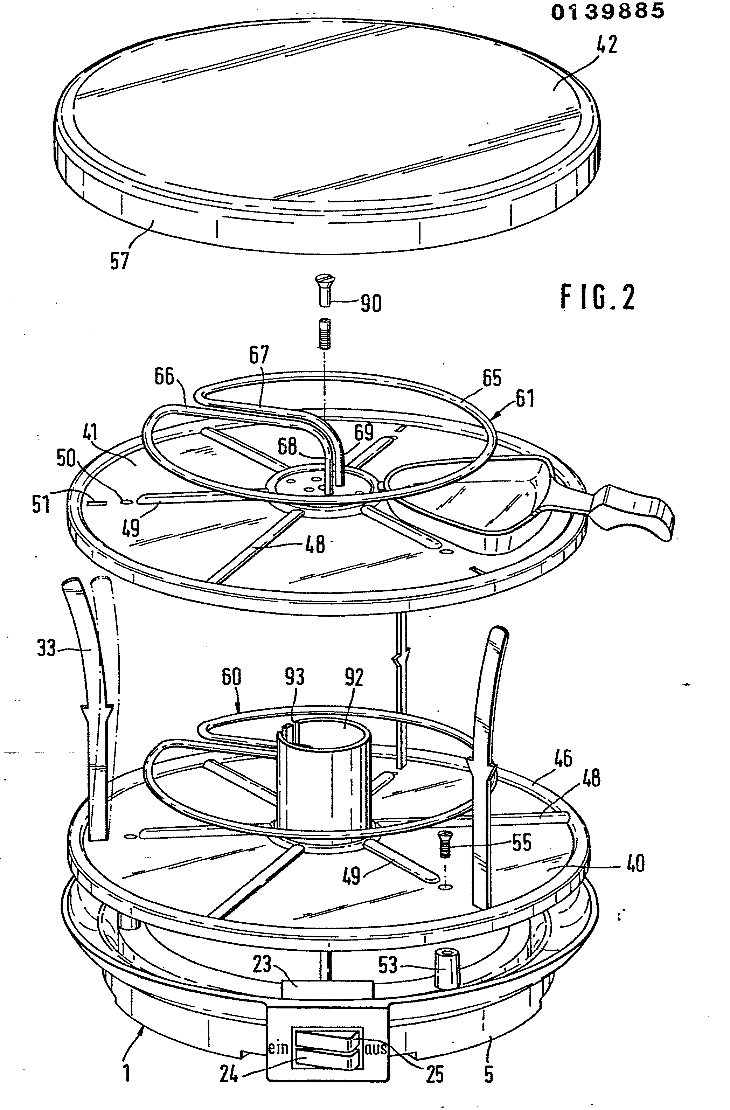

Das Gerät gemäß Figuren 1 und 2 weist ein Grundgehäuse 1 in
Form einer flachen Schale auf. Das Grundgehäuse besteht aus
einem wärmeunempfindlichen Kunststoff, beispielsweise einer
Melaminharz-Phenolharz-Preßmasse. Das einstückig geformte
Grundgehäuse 1 weist eine kreisförmige Bodenplatte 2 mit
einigen Lüftungsschlitzen 3, einen die Bodenplatte umschließenden Kabelkanal 4, in Umfangsrichtung versetzte bogenförmige Fußleisten 5 im Bereich der Außenwand des Kabelkanals 4 und eine im Profil geschweifte Wand 6, mit einem im
wesentlichen waagerecht verlaufenden Mittelabschnitt 7 und
einem nach oben aufragenden Gehäuserand 8 auf.

Der Kabelkanal 4 nimmt das elektrische Anschlußkabel 10 in
mehreren Windungen auf. Er ist im wesentlichen oberhalb der
Bodenplatte 2 angeordnet, an seiner oberen Seite geschlossen
und an seiner Unterseite über die ganze Umfangslänge mit
einer Einführ- und Entnahmeöffnung 11 versehen. Diese ist
beispielsweise an vier um $90^o$ zueinander versetzten Stellen
durch von der Bodenplatte 2 nach außen vorspringende Zungen 12
verengt, an denen vorbei das Anschlußkabel 10 in den Kabelkanal 4 eingedrückt und in entsprechender Weise entnommen
werden kann. Durch eine Innenwandöffnung 13 des Kabelkanals 4
ist das Anschlußkabel 10 in das Grundgehäuse 1 eingeführt und
hier durch einen Klemmbügel 14 und zwei Schrauben 15 befestigt,
die in einen von der Bodenplatte aufragenden Gehäuseansatz 16
eingeschraubt sind. Das Anschlußkabel 10 kann durch einen von
zwei oder mehr Außenwandschlitzen des Kabelkanals 4 nach außen
geführt sein. Die Breite der vertikalen Außenwandschlitze 17,

./.

die in Bereichen zwischen den Fußleisten 5 angeordnet sind,
ist so bemessen, daß das Anschlußkabel 10 im betreffenden
Außenwandschlitz festgeklemmt ist. Somit kann das Anschlußkabel 10 im wesentlichen vollständig vom Kabelkanal 4 aufgenommen werden, so daß sein Stecker nahe der Gehäusewand 6
angeordnet und gehalten ist. Andererseits kann das Anschlußkabel 10 im erforderlichen Ausmaß abgewickelt und an einer
im Hinblick auf die zu benutzende Steckdose passenden Umfangsstelle aus dem Gerät herausgeführt werden.

Die Gehäusewand 6 springt innerhalb eines Umfangsbereichs
radial nach außen vor, wodurch eine Schalterkammer 20 gebildet ist, die von einem Kammerboden 21 und einer ebenen Außenwand 22 begrenzt ist. Die Schalterkammer 20 nimmt einen
Schalterblock 23 auf, der zwei Wippschalter 24 und 25 aufweist, die durch eine Aussparung 26 in der Außenwand 22
ragen und somit von außen betätigt werden können. Vom Schalterblock 23 erstreckt sich ein Verbindungskabel 27 zu einem
an der Bodenplatte 2 befestigten Anschlußkasten 28, der zur
Herstellung der elektrischen Verbindungen dient.

An drei um 120° zueinander in Umfangsrichtung versetzten
Stellen sind an der Oberseite des Mittelabschnitts 7 der Gehäusewand 6 Ansätze 30 ausgebildet, die Aufnahmen 31 bilden,
die das untere Ende von drei identisch ausgebildeten Stützen
33 mit Spiel aufnehmen. Die Stützen 33 sind aus einem ebenen
Blechstreifen geformt, der einen im wesentlichen vertikalen
unteren Abschnitt 34 und einen leicht nach außen gekrümmten
oberen Abschnitt 35 mit einem gerundeten oberen Ende 36 aufweist. Am Übergang zwischen dem unteren Abschnitt 34 und dem
oberen Abschnitt 35 weisen die Stützen 33 in der Stützenebene
vorspringende Auflageanschläge 37 und 38 auf.

Das Gerät ist mit einer unteren Tragplatte 40, einer oberen
Tragplatte 41 und einer Abdeckplatte 42 versehen, die jeweils
aus einem Blech hergestellt sind, eine kreisrunde Form auf-

./.

weisen und etwa die gleiche Größe besitzen.

Die Tragplatten 40 und 41 sind im wesentlichen gleich ausgebildet. Sie weisen einen zentralen Bereich 43 auf, der durch eine nach oben vorspringende Ringsicke 44 von einem äußeren Ringbereich 45 getrennt ist, der von einem aufragenden Plattenrand 46 umgrenzt ist, der eine nach unten abgebogene Randkante 47 aufweist. Von der Ringsicke 44 erstrecken sich jeweils um 60° zueinander versetzt abwechselnd drei lange Radialsicken 48, die in den Plattenrand 46 auslaufen, sowie drei kurze Radialsicken 49, die im Abstand vom Plattenrand 46 enden. Auf den durch die drei kurzen Radialsicken festgelegten Radien weisen die Tragplatten 40 und 41 jeweils eine der kurzen Radialsicke 49 benachbarte versenkte Bohrung 50 sowie einen dem Plattenrand 46 benachbarten Radialschlitz 51 auf, dessen Abmessungen dem Profil der Stützen 33 angepaßt sind.

In zusammengebauter Stellung erstrecken sich die drei Stützen 33 jeweils durch einen Radialschlitz 51 der unteren Tragplatte 40 und der oberen Tragplatte 41, die auf den Auflageanschlägen 37 und 38 der Stütze aufliegt. Die untere Tragplatte 40 liegt auf drei Gehäusezapfen 53 auf, die gleichmäßig in Umfangsrichtung verteilt vom Kabelkanal 4 so hoch aufragen, daß die untere Tragplatte 40 mit ihrer herabgezogenen Randkante 47 innerhalb des Gehäuserands 8 angeordnet ist. Die Gehäusezapfen 53 sind mit einer Gewindebohrung 54 versehen, in die jeweils eine Schraube 55 eingeschraubt ist, die sich durch die betreffende Bohrung 50 der unteren Tragplatte 40 erstreckt, so daß diese am Grundgehäuse 1 befestigt ist.

Die Abdeckplatte 42 weist einen herabragenden Umfangsrand 57 auf, der über einen gekrümmten Verbindungsabschnitt 58 an die im übrigen ebene Abdeckplatte 42 angeschlossen ist. Die Abdeckplatte 42, die eine reflektierende Unterseite aufweist, ist lose auf die drei Stützen 33 aufgesetzt, wobei deren gerundete oberen Enden 36 in die vom Verbindungsabschnitt 58

./.

gebildete Hohlkehle eingreifen, wie es Fig. 1 zeigt.

Das Gerät weist ferner einen unteren Rohrheizkörper 60 und einen oberen Rohrheizkörper 61 auf. Beide Rohrheizkörper 60 und 61 sind im wesentlichen identisch ausgebildet und weisen einen elektrischen Leiter 62 auf, der in ein Isoliermaterial 63 eingebettet ist, das von einem Mantelrohr 64 umgeben ist. Die Rohrheizkörper 60 und 61 bilden eine Windung 65 in Form eines nahezu geschlossenen Kreisbogens, innerhalb dessen der Leiter 62 einen Heizwiderstand bildet. An die einander benachbarten Enden der Windung 65 schließen sich zwei im Abstand parallel zueinander verlaufende Heizkörperschenkel 66 und 67 an, die sich in der Windungsebene im wesentlichen radial zur Windungsmitte erstrecken und dort in nach unten abgebogene Endabschnitte 68 und 69 übergehen. Diese Endabschnitte 68 und 69 sind fest mit einer unteren Heizkörperplatte 70 bzw. einer oberen Heizkörperplatte 71 verbunden, unterhalb der sie in einem Abstand von beispielsweise etwa 2 cm enden und mit Heizkörperkontakten 72 versehen sind.

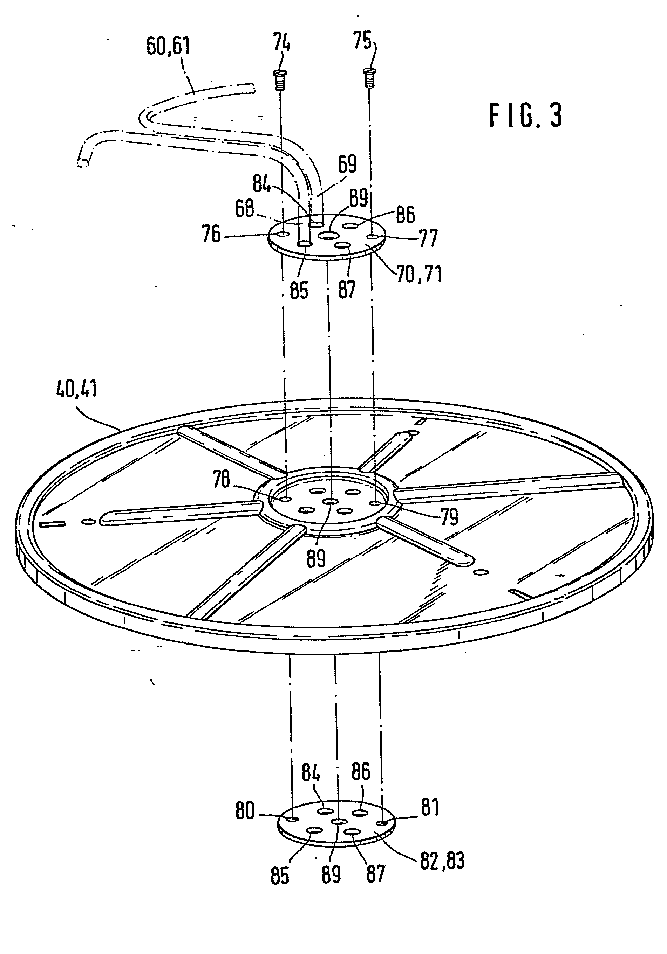

Die Heizkörperplatten 70 und 71 sind als kreisförmige Blechteile ausgebildet, die jeweils innerhalb der Ringsicke 44 auf der Tragplatte 40 bzw. 41 aufliegen. Mit der Tragplatte 40 bzw. 41 sind die Heizkörperplatten 70 und 71 und damit die Rohrheizkörper 60 und 61 durch zwei Befestigungsschrauben 74 und 75 (Fig. 3) verbunden, die sich durch Bohrungen 76 und 77 in den Heizkörperplatten sowie darauf ausgerichtete Bohrungen 78 und 79 in der Tragplatte 40 bzw. 41 erstrecken und in Gewindebohrungen 80 und 81 einer unteren Befestigungsplatte 82 bzw. einer oberen Befestigungsplatte 83 eingeschraubt sind, die an der Unterseite des zentralen Bereichs 43 der Tragplatten 40 bzw. 41 anliegen.

Die Heizkörperplatten 70 und 71, die Tragplatten 40 und 41 sowie die Befestigungsplatten 82 und 83 weisen jeweils zwei aufeinander ausgerichtete Durchführungsöffnungen 84 und 85

./.

für die Endabschnitte 68 und 69 der Rohrheizkörper 60 und 61 sowie zwei weitere Zwischenrohrdurchführungsöffnungen 86 und 87 sowie eine zentrale Spannöffnung 89 auf, durch die sich gemäß Fig. 1 eine Zugschraube 90 erstreckt, auf deren unteres Gewindeende eine Mutter 91 aufgeschraubt ist. Auf diese Weise sind die Tragplatten 40 und 41 gegen die Enden eines zentralen Distanzrohrs 92 aus Blech angezogen, das die untere Heizkörperplatte 70 und die obere Befestigungsplatte 83 eng umschließt und zwei von ihrem oberen Ende ausgehende Einschnitte 93 zur Durchführung der Heizkörperschenkel 66 und 67 des unteren Rohrheizkörpers 60 aufweist.

Durch die Zwischenrohrdurchführungsöffnungen 86 und 87 der unteren Heizkörperplatte 70, der unteren Tragplatte 40 und der unteren Befestigungsplatte 82 erstrecken sich zwei Zwischenrohre 94, die fest mit der unteren Heizkörperplatte 70 verbunden sind und einen unteren Endkontakt 95 sowie einen oberen Endkontakt 96 aufweisen. Die oberen Endkontakte 96 der Zwischenrohre 94 sind jeweils durch eine Steckverbindung mit einem Heizkörperkontakt 72 des oberen Rohrheizkörpers 61 verbunden. Ggf. könnten die Endabschnitte 68 und 69 des oberen Rohrheizkörpers 61 auch axial auf die Zwischenrohre 94 ausgerichtet sein, so daß die elektrische Verbindung durch den axialen Zusammenbau der Teile hergestellt und durch die Zugschraube 90 gesichert wird. Bei dem dargestellten und beschriebenen Ausführungsbeispiel bleiben jedoch die Öffnungen 86 und 87 in der oberen Heizkörperplatte 71, der oberen Tragplatte 41 und der oberen Befestigungsplatte 83 unbenutzt. Sie sind lediglich vorgesehen, um abweichend ausgebildete Teile zu vermeiden.

So sind auch an beiden Befestigungsplatten 82 und 83 nach unten ausgeklinkte Erdungszungen 97 vorgesehen, obwohl nur die an der unteren Befestigungsplatte 82 vorgesehene Erdungszunge 97 ebenso wie die unteren Endkontakte 95 der Zwischenrohre 94 und die Heizkörperkontakte 72 des unteren Rohrheizkörpers 60 über Anschlußkontakte 98 mit dem elektrischen

./.

Anschlußkasten 28 im Grundgehäuse 1 verbunden sind.

Zum Gerät gehören noch zwölf mit einem isolierten Handgriff 99
versehene Raclettepfännchen 100, die annähernd die Form eines
gleichseitigen Dreiecks aufweisen, wobei die Griffwand nach
außen vorgewölbt ist und die gegenüberliegende Pfannenecke
eine große Rundung aufweist. Die Raclettepfännchen 100 sind
so bemessen, daß sie jeweils in eine Tragplattenmulde 39 gestellt
werden können, die von einer langen Radialsicke 48, einer
kurzen Radialsicke 49, einem Sektor der Ringsicke 44 und einem
Sektor des Plattenrandes 46 umgrenzt ist.

Der Zusammenbau erfolgt in der Weise, daß zunächst die Rohrheizkörper mittels der Heizkörperplatten 70 und 71, der Befestigungsplatten 82 und 83 sowie der Befestigungsschrauben
74 und 75 mit den Tragplatten 40 bzw. 41 verbunden werden,
wobei das Verbinden mit der unteren Tragplatte 40 nach dem
vorherigen Einsetzen des Distanzrohrs 92 erfolgt. Dann werden
die beiden Tragplatten 40 und 41 von entgegengesetzten Enden
her auf die drei Stützen 33 aufgefädelt, worauf die Anordnung
nach Herstellung der elektrischen Verbindung zwischen den
oberen Endkontakten 96 und den Heizkörperkontakten 72 mittels
der Zugschraube 90 und der Mutter 91 fest verspannt wird.
Diese nunmehr standfeste Anordnung wird nach dem Anschließen
der Anschlußkontakte 98 mit den unteren Stützenenden 32 in
die Aufnahmen 31 des Gehäuses 1 gestellt, worauf die Teile
mittels der drei Schrauben 55 aneinander befestigt werden.
Eine ggf. zu Wartungs- oder Reparaturzwecken erforderlich
werdende Demontage kann in entsprechender Weise einfach durchgeführt werden.

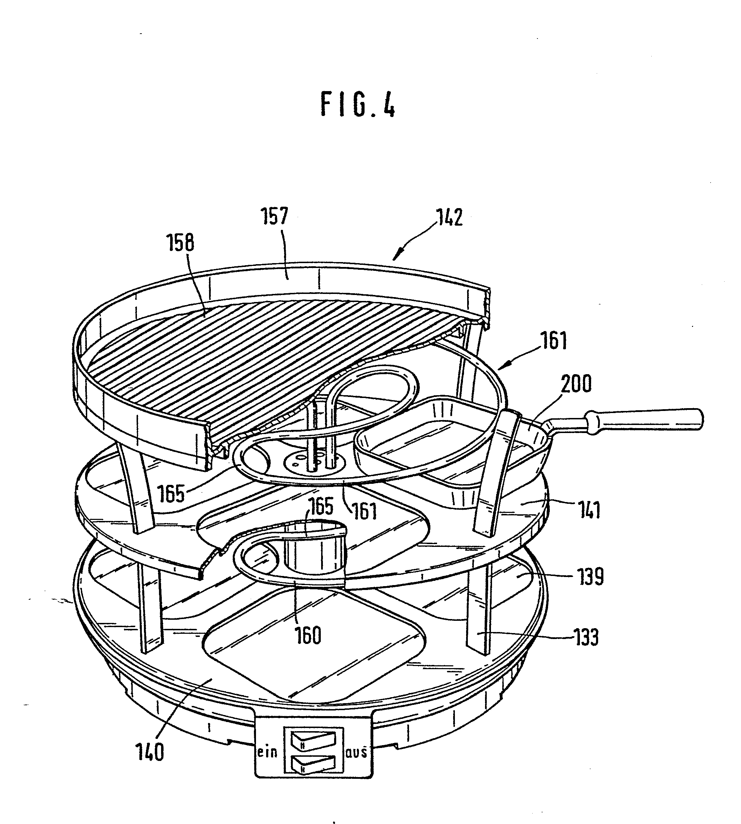

Das in Fig. 4 dargestellte Ausführungsbeispiel betrifft
gleichfalls eine zweistöckige Ausbildung mit einer unteren
Tragplatte 140 und einer oberen Tragplatte 141, die jedoch
jeweils nur vier vertiefte Mulden 139 aufweisen, die zur Aufnahme von Pfännchen 200 im Toastformat vorgesehen sind.

./.

Dementsprechend sind auch nicht drei sondern vier Stützen 133 vorgesehen. Auch die Rohrheizkörper 161 sind abweichend mit einer Heizschlange 165 ausgebildet, die sich sowohl längs eines äußeren Kreisbogens wie längs eines inneren Kreisbogens um die vertikale Geräteachse erstreckt. Schließlich ist die Abdeckplatte durch eine auf die Stützen 133 aufgesetzte Grillplatte 142 mit einem aufragenden Umfangsrand 157 und Auflagerippen 158 für Grillgut versehen. Die Unterseite der Grillplatte 142 ist naturgemäß nicht reflektierend ausgeführt, so daß die Grillplatte 142 vom oberen Rohrheizkörper 161 auf Grilltemperatur aufgeheizt werden kann.

Die vorgesehenen zwei Rohrheizkörper 60 und 61 bzw. 160 und 161 führen nicht nur zu einer Verdoppelung der Kapazität bzw. Leistung des Geräts sondern ermöglichen zusätzliche Funktionen. So können die Rohrheizkörper unterschiedliche Heizleistungen aufweisen, wodurch den individuellen Anforderungen besser entsprochen werden kann, zumal je nach Betätigung der Wippschalter 24 und 25 jeder der beiden Rohrheizkörper nach Wunsch allein eingeschaltet werden kann. Sind beide Rohrheizkörper eingeschaltet, so ist zwischen diesen eine Schnellheizzone ausgebildet, die sowohl von oben wie von unten beheizt wird. Im übrigen kann als dritter Schalter ein nicht dargestellter Wahlschalter vorgesehen sein, der die beiden Rohrheizkörper wahlweise parallel oder in Reihe schaltet. Durch die Umschaltung von Parallelbetrieb auf Reihenbetrieb sind mit dem selben Gerät auch die Betriebsarten Garen und Warmhalten möglich.

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 401 39885

Europäische Patentanmeldung

G 23. 12 EP 39
19. Juli 1984/15S

Anmelder:      Firma
GROSSAG Gesellschaft mit
beschränkter Haftung
D-7170 Schwäbisch Hall

Bezeichnung:   Gerät zum Raclettieren, Grillen oder
Überbacken

B e z u g s z e i c h e n l i s t e :

| | |
|---|---|
| 1 Grundgehäuse | 46 Plattenrand |
| 2 Bodenplatte | 47 Randkante |
| 3 Lüftungsschlitze | 48 lange Radialsicken |
| 4 Kabelkanal | 49 kurze Radialsicken |
| 5 Fußleisten | 50 Bohrungen |
| 6 Gehäuserand | 51 Radialschlitze |
| 7 Mittelabschnitt (von 6) | 53 Gehäusezapfen |
| 8 Gehäusewand | 54 Gewindebohrung |
| 10 Anschlußkabel | 55 Schrauben |
| 11 Einführ- u.Entnahmeöffnung | 57 Umfangsrand (von 42) |
| 12 Zungen | 58 Verbindungsabschnitt (v.42) |
| 13 Innenwandöffnung (von 4) | 60 unterer Rohrheizkörper |
| 14 Klemmbügel | 61 oberer Rohrheizkörper |
| 15 Schrauben | 62 Leiter |
| 16 Gehäuseansatz | 63 Isoliermaterial |
| 17 Außenwandschlitze (von 4) | 64 Mantelrohr |
| 20 Schaltkammer | 65 Windung |
| 21 Kammerboden | 66 Heizkörperschenkel |
| 22 Außenwand | 67 Heizkörperschenkel |
| 23 Schalterblock | 68 Endabschnitt (von 60,61) |
| 24 Wippschalter | 69 Endabschnitt (von 60,61) |
| 25 Wippschalter | 70 untere Heizkörperplatte |
| 26 Aussparung | 71 obere Heizkörperplatte |
| 27 Verbindungskabel | 72 Heizkörperkontakte |
| 28 Anschlußkasten | 74 Befestigungsschraube |
| 30 Ansätze | 75 Befestigungsschraube |
| 31 Aufnahmen | 76 Bohrung |
| 32 unteres Ende (von 33) | 77 Bohrung |
| 33 Stützen | 78 Bohrung |
| 34 unterer Abschnitt (von 33) | 79 Bohrung |
| 35 oberer Abschnitt (von 33) | 80 Gewindebohrung |
| 36 oberes Ende(von 33) | 81 Gewindebohrung |
| 37 Auflageanschlag | 82 untere Befestigungsplatte |
| 38 Auflageanschlag | 83 obere Befestungsplatte |
| 39 Mulden | 84 Durchführungsöffnung |
| 40 untere Tragplatte | 85 Durchführungsöffnung |
| 41 obere Tragplatte | 86 Zwischenrohrdurchführungsöff |
| 42 Abdeckplatte | 87 Zwischenrohrdurchführungsöff |
| 43 zentraler Bereich | 89 Spannöffnung |
| 44 Ringsicke | 90 Zugschraube |
| 45 äußerer Ringbereich | 91 Mutter |
| | 92 Distanzrohr |

.⁄.

93 Einschnitte
94 Zwischenrohre
95 unterer Endkontakt
96 oberer Endkontakt
97 Erdungszungen
98 Anschlußkontakte
99 Handgriff
100  Raclettepfännchen
133 Stützen
139 Mulden
140 untere Tragplatte
141 obere Tragplatte
142 Grillplatte
157 Umfangsrand (von 142)
158 Auflagerippen (von 142)
160 unterer Rohrheizkörper
161 oberer Rohrheizkörper
165 Heizschlange
200 Pfännchen im Toastformat

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d
BW-Bank Heilbronn: 701 17106 00 (BLZ 620 300 50) Postscheck Stuttgart: 43016-704

**0139885**

Europäische Patentanmeldung
G 23. 12 EP 39
19. Juli 1984/15s

Anmelder:   Firma
GROSSAG Gesellschaft mit
beschränkter Haftung
Brückäckerstr. 9
Postfach 10 02 80

D-7170 Schwäbisch Hall

Bezeichnung:   Gerät zum Raclettieren, Grillen oder
Überbacken

A n s p r ü c h e :

1. Gerät zum Raclettieren, Grillen oder Überbacken, bestehend aus einem Grundgehäuse (1) mit einer Tragplatte (40,140) für seitlich einschiebbare Pfännchen (100,200), einem elektrischen Rohrheizkörper (60,160) der sich im Abstand über der Tragplatte (40,140) erstreckt und sich am Grundgehäuse (1) abstützt, und einer oberhalb des Rohrheizkörpers (60,160) angeordneten Abdeckplatte (42,142),die am Grundgehäuse (1) abgestützt ist und ggf. an ihrer Oberseite Auflagerippen (158) für Grillgut aufweist,, d a d u r c h   g e k e n n z e i c h n e t , daß über dem Rohrheizkörper (60,160) eine am Grundgehäuse (1) abgestützte weitere obere Tragplatte (41,141) für seitlich einschiebbare Pfännchen (100,200) und im Abstand über der oberen Tragplatte (41,141) sowie unterhalb der Abdeckplatte (42,142) ein oberer elektrischer Rohrheizkörper (61,161) angeordnet sind.

./.

2. Gerät nach Anspruch 1 mit am Plattenrand (46) angeordneten vertikalen Stützen (33,133), die in Umfangsrichtung zueinander versetzt sind und Einschieböffnungen für die Pfännchen (100,200) begrenzen, dadurch g e k e n n z e i c h n e t , daß die Abdeckplatte (42,142) auf oberen Stützen (35) ruht, die von der oberen Tragplatte (41,141) aufragen, die mit der unteren Tragplatte (40,140) durch von dieser aufragende untere Stützen (34) verbunden ist.

3. Gerät nach Anspruch 1 oder 2, dadurch g e k e n n z e i c h n e t , daß zwischen dem unteren Rohrheizkörper (60,160) und der oberen Tragplatte (41,141) wenigstens eine mittlere Tragplatte für seitlich einschiebbare Pfännchen (100,200) und ein im Abstand über ihr angeordneter mittlerer Rohrheizkörper vorgesehen sind, die ebenfalls am Grundgehäuse (1) abgestützt sind.

4. Gerät nach Anspruch 2 und 3, dadurch g e k e n n z e i c h n e t , daß die mittlere Tragplatte durch die unteren Stützen (34) mit der unteren Tragplatte (40,140) und durch von ihr aufragende mittlere Stützen mit der oberen Tragplatte (41,141) verbunden ist.

5. Gerät nach einem der Ansprüche 2 bis 4, dadurch g e k e n n z e i c h n e t , daß die oberen Stützen (35) sowie die ggf. vorhandenen mittleren Stützen auf die unteren Stützen (34) ausgerichtet sind.

6. Gerät nach einem der Ansprüche 2 bis 4, dadurch g e k e n n z e i c h n e t , daß die unteren Stützen (34) und die oberen Stützen (35) sowie die ggf. vorhandenen mittleren Stützen jeweils von einer vom Grundgehäuse (1) bis zur Abdeckplatte (42,142) durchgehenden Stütze (33,133) gebildet sind.

.·/.

7. Gerät nach Anspruch 6, dadurch g e k e n n z e i c h - n e t , daß die durchgehenden Stützen (33,133) mit Auflageanschlägen (36,37,38) für die Tragplatten (41,141) und die Abdeckplatte (42,142) versehen sind.

8. Gerät nach einem der Ansprüche 1 bis 7, dadurch g e - k e n n z e i c h n e t , daß die Rohrheizkörper (60,61, 160,161) zentral nach unten durch die zugehörige Tragplatte (40,41,140,141) hindurchgeführte Endabschnitte (68,69) aufweisen, die an der Tragplatte (40,41,140,141) befestigt sind.

9. Gerät nach Anspruch 8, dadurch g e k e n n z e i c h - n e t , daß die Endabschnitte (68,69) der Rohrheizkörper (60,61,160,161) an ihren unteren Enden unterhalb der zugehörigen Tragplatte (40,41,140,141) gelegene Heizkörperkontakte (72) aufweisen, die in Einbaulage der Tragplatte (40,41,140,141) mit Anschlußkontakten (98) im zentralen Gerätebereich verbunden sind.

10. Gerät nach Anspruch 9, dadurch g e k e n n z e i c h - n e t , daß die Heizkörperkontakte (72) des oberen Rohrheizkörpers (61,161) und ggf. des mittleren Rohrheizkörpers über Endkontakte (95 und 96) aufweisende vertikale Zwischenrohre (94) mit ihren im Grundgehäuse (1) angeordneten Anschlußkontakten (98) verbunden sind, wobei die Zwischenrohre (94) sich jeweils durch eine Tragplatte (40,140) erstrecken und an dieser befestigt sind.

11. Gerät nach einem der Ansprüche 1 bis 10, dadurch g e - k e n n z e i c h n e t , daß zwischen benachbarten Trag- platten (40 und 41, 140 und 141) ein zentrales Distanzrohr (92) angeordnet ist, gegen dessen Enden die Tragplatten (40,41,140,141) mittels wenigstens einer Zugschraube (90) angezogen sind.

./.

12. Gerät nach einem der Ansprüche 1 bis 11, dadurch
gekennzeichnet , daß am Grundgehäuse (1)
getrennte Schalter (24 und 25) für die einzelnen Rohrheizkörper (60,61,160,161) angeordnet sind.

13. Gerät nach einem der Ansprüche 1 bis 12, dadurch
gekennzeichnet , daß die Rohrheizkörper
(60,61,160,161) unterschiedliche Heizleistungen aufweisen.

14. Gerät nach einem der Ansprüche 1 bis 13, dadurch
gekennzeichnet , daß ein Wahlschalter zum
Umschalten der Rohrheizkörper (60,61,160,161) zwischen
Parallelbetrieb und Reihenbetrieb vorgesehen ist.

0139885

0139885

FIG.2

0139885

60,61    74    75

FIG. 3

69

84
68    89    86
76    77
85    87    70,71

40,41

78    79

89

84    86

80    81

85    89    87    82,83

# FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-U-7 703 541 (GROSSAG GmbH)<br>* Insgesamt *<br><br>--- | 1 | A 47 J 37/06 |
| A | FR-A- 962 577 (TOTH)<br>* Figur 6 *<br><br>--- | 1 | |
| A | DE-A-3 114 050 (PETRA ELECTRIC)<br>* Insgesamt *<br><br>--- | 1 | |
| A | EP-A-0 054 160 (MOULINEX S.A.)<br>* Insgesamt *<br><br>--- | 1 | |
| A | FR-A-2 291 727 (BOSCH-SIEMENS)<br>* Insgesamt *<br><br>--- | 1 | |
| A | US-A-2 578 034 (BALTZELL)<br>* Insgesamt *<br><br>----- | 1 | **RECHERCHIERTE SACHGEBIETE (Int. Cl.4)**<br><br>A 47 J<br>F 24 C |

Der vorliegende Recherchenbericht wurde für alle Patentansprüche erstellt.

| Recherchenort<br>DEN HAAG | Abschlußdatum der Recherche<br>30-11-1984 | Prüfer<br>SCHARTZ J. |
|---|---|---|